# EUROPEAN PATENT SPECIFICATION

(11) **EP 4 416 195 B1**
(45) Date of publication and mention of the grant of the patent: **02.12.2026**
(21) Application number: 22802079.8
(22) Date of filing: 11.10.2022
(51) Int. Cl.: C08F 210/06, C08L 23/12, C08L 23/14, B32B 27/32

(54) **HETEROPHASIC POLYPROPYLENE COMPOSITION**
HETEROPHASISCHE POLYPROPYLENZUSAMMENSETZUNG
COMPOSITION DE POLYPROPYLÈNE HÉTÉROPHASIQUE

(30) Priority: 12.10.2021 EP 21202209
(43) Date of publication of application: 21.08.2024
(73) Proprietor: Borealis GmbH, 1020 Vienna (AT)
(72) Inventor: MILEVA, Daniela, 4021 Linz (AT); WANG, Jingbo, 4021 Linz (AT); GAHLEITNER, Markus, 4021 Linz (AT); BERNREITNER, Klaus, 4021 Linz (AT); FRIEDRICH, Karlheinz, 2320 Schwechat (AT)
(74) Representative: Maiwald GmbH
(86) International application number: PCT/EP2022/078180
(87) International publication number: WO 2023/061974

(56) References cited:
- EP-A1- 3 812 404
- EP-A1- 3 812 405
- EP-A1- 3 954 737
- WO-A1-2016/116606
- WO-A1-2020/221765
- WO-A1-2021/144404
- WO-A1-2022/034126

## Description

### Field of the Invention

The present invention concerns heterophasic polypropylenes and particularly metallocene derived heterophasic polypropylenes.

### Background

The demands in thin wall packaging applications are growing in the direction of polypropylene based materials with high flowability, good stiffness-impact balance and high transparency. It is a challenging task to achieve such a property profile due to the fact that by increasing the stiffness with decreasing the rubber content of the system, the toughness decreases as well. On the other side, a high amount of rubber content will cause decrease of transparency. In addition to that more constant drop test performance upon storage is required in the market and customers also request lower compression test variation.

EP3315551 describes a low melt flow rate heterophasic polypropylene composition having too high haze and too low flowability. Thus, the present invention aims at compositions having good flowability, low haze, high stiffness and acceptable drop test performance with low variation upon storage.

The present invention is based on the surprising finding that adjusting the melting temperature of the heterophasic polypropylene copolymers together with carefully adjusting total ethylene content as well as ethylene content of the CF fraction (in CRYSTEX) and SF fraction (in CRYSTEX) as well as intrinsic viscosity thereof enables a unique properties profile.

EP3812405A1 discloses heterophasic polypropylene compositions being made in four reactors having rather high haze and a varying total ethylene conent.

### Summary of the Invention

The present invention provides a heterophasic propylene copolymer composition (HPPC), having an MFR₂ measured according to ISO 1133 at 230 °C and 2.16 kg in the range from 45.0 to 100.0 g/10 min, comprising
(a) a propylene copolymer matrix, and
(b) an ethylene-propylene rubber being dispersed in said matrix,
wherein the heterophasic propylene copolymer composition (HPPC) has
(i) a melting temperature Tm, measured by DSC according to ISO 11357-3 (heating and cooling rate 10 °C/min), in the range of 150 to 154 °C; and
(ii) a total ethylene content of the heterophasic propylene copolymer composition (HPPC) measured by Fourier Transform Infrared Spectroscopy (FTIR) during CRYSTEX analysis, in the range of 1.5 to 2.4 wt.-%; and
(iii) a crystalline fraction (CF), determined according to CRYSTEX QC method ISO 6427 Annex B, present in an amount in the range from 82.0 to 92.0 wt.-%, relative to the total weight of the heterophasic propylene copolymer composition (HPPC); and
(iv) a soluble fraction (SF), determined according to CRYSTEX QC method ISO 6427 Annex B, present in an amount in the range from 8.0 to 18.0 wt.-%, relative to the total weight of the heterophasic propylene copolymer composition (HPPC); and
(v) an ethylene content of the crystalline fraction (CF), measured by Fourier Transform Infrared Spectroscopy (FTIR) during CRYSTEX analysis, in the range of 0.2 to 1.0 wt.-%;
(vi) an ethylene content of the soluble fraction (SF), measured by Fourier Transform Infrared Spectroscopy (FTIR) during CRYSTEX analysis, in the range of 10.0 to 16.0 wt.-%; and
(vii) an intrinsic viscosity of the soluble fraction (SF) measured according to ISO 1628-1 (at 135 °C in decalin), in the range from 2.0 to 2.6 dl/g; and
(viii) a ratio of the intrinsic viscosity of the soluble fraction (SF) measured according to ISO 1628-1 (at 135 °C in decalin) versus the intrinsic viscosity of the crystalline fraction (CF) measured according to ISO 1628-1 (at 135 °C in decalin) IV(SF)/IV(CF) in the range of 1.0 to 3.0.

The heterophasic propylene copolymer composition (HPPC) according to the present invention provides surprisingly low haze for the stiffness level.

In a preferred aspect, the heterophasic propylene copolymer composition (HPPC) according the present invention has a flexural modulus of 1150 to 1350 MPa according to ISO 178.

The heterophasic propylene copolymer composition (HPPC) according to present invention preferably is alpha nucleated.

The soluble nucleating agent according the present invention may be selected from the group (i) and/or group (ii).

Group (i) consists of:
(i) soluble nucleating agents, like sorbitol derivatives, e.g. di(alkylbenzylidene)sorbitols as 1 ,3:2,4-dibenzylidene sorbitol, 1 ,3:2,4-di(4-methylbenzylidene) sorbitol, 1 ,3:2,4-di(4-ethylbenzylidene) sorbitol and 1 ,3:2,4-Bis(3,4-dimethylbenzylidene) sorbitol, as well as nonitol derivatives, e.g. 1 ,2,3-trideoxy-4,6;5,7-bis-0-[(4-propylphenyl)methylene] nonitol, and benzene-trisamides like substituted 1 ,3,5-benzenetrisamides as N,N',N"-tris-tert-butyl-1 ,3,5- benzenetricarboxamide, N,N',N"-tris-cyclohexyl-1 ,3,5-benzenetricarboxamide and N-[3,5-bis-(2,2-dimethyl-propionylamino)-phenyl]-2,2-dimethyl-propionamide, wherein 1 ,3:2,4-Bis(3,4-dimethylbenzylidene) sorbitol and N-[3,5-bis-(2,2-dimethyl- propionylamino)-phenyl]-2,2-dimethyl-propionamide are equally preferred, and 1 , 3:2,4- Bis(3,4-dimethylbenzylidene) sorbitol is especially preferred.

Group (ii) consists of:
polymeric nucleating agents, such as polymerized vinyl compounds, in particular vinyl cycloalkanes, like vinyl cyclohexane (VCH), poly(vinyl cyclohexane) (PVCH), poly (vinyl cyclopentane) (PVCP), and vinyl-2-methyl cyclohexane, 3-methyl-1 -butene, 3-ethyl-1-hexene, 3-methyl-1-pentene, 4-methyl-1-pentene or mixtures thereof. PVCH and PVCP are particularly preferred.

It is particularly preferred that at least two nucleating agents, one selected from group (i) and one selected from group (ii) are present. It is especially preferred, that the first nucleating is a sorbitol based nucleating agent, particularly 1 ,3:2,4-Bis(3,4-dimethylbenzylidene) sorbitol and the second nucleating is a polymeric nucleating agent, particularly PVCH or PVCP.

The soluble nucleating agents according to group (i) is preferably present in amounts of between 100 - 3000 ppm, more preferably 1000 - 2500 ppm, such as 1500 - 2200 ppm, all amounts relative to the heterophasic propylene copolymer composition (HPPC). The amount of polymeric nucleating agent according to group (ii) in the the heterophasic propylene copolymer composition (HPPC) may be in the range of 0.1 ppm to 50 ppm, preferably in the range of 0.3 - 30 ppm, more preferably in the range of 0.5 to 20 ppm. The polymeric nucleating agent according to group (ii) is preferably incorporated in form of a masterbatch.

In yet a further preferred aspect, the heterophasic propylene copolymer composition (HPPC) according to the present invention has a crystalline fraction (CF), determined according to CRYSTEX QC method ISO 6427 Annex B, present in an amount in the range from 83.0 to 89.0 wt.-%, relative to the total weight of the heterophasic propylene copolymer composition (HPPC); and soluble fraction (SF), determined according to CRYSTEX QC method ISO 6427 Annex B, present in an amount in the range from 11.0 to 17.0 wt.-%, relative to the total weight of the heterophasic propylene copolymer composition (HPPC).

The heterophasic propylene copolymer composition (HPPC) according to the present invention preferably has an intrinsic viscosity of the soluble fraction (SF) measured according to ISO 1628-1 (at 135 °C in decalin), in the range from 2.2 to 2.5 dl/g.

The heterophasic propylene copolymer composition (HPPC) according to the present invention preferably has a ratio of the intrinsic viscosity of the soluble fraction (SF) measured according to ISO 1628-1 (at 135 °C in decalin) versus the intrinsic viscosity of the crystalline fraction (CF) measured according to ISO 1628-1 (at 135 °C in decalin) IV(SF)/IV(CF) in the range of 2.0 to 3.0.

The heterophasic propylene copolymer composition (HPPC) according to the present invention preferably has a haze measured on a 1 mm thick test specimen of less than 20 percent, more preferably less than 17 percent (determined at 230°C). The terminology "has a haze measured on a 1 mm thick test specimen" does not limit the heterophasic propylene copolymer composition (HPPC) to 1 mm thick articles but is to be understood to characterize the heterophasic propylene copolymer composition (HPPC) further, i.e. the heterophasic propylene copolymer composition (HPPC) according to the present invention when being made into a 1 mm thick test specimen preferably has a haze of less than 20 percent, more preferably less than 17 percent (determined at 230°C).

In yet a further preferred aspect, the heterophasic propylene copolymer composition (HPPC) according to the present invention has an MFR₂ measured according to ISO 1133 at 230 °C and 2.16 kg in the range from 50.0 to 70.0 g/10 min.

The heterophasic propylene copolymer composition (HPPC) according to present invention is usually made in a multistage process, whereby preferably the matrix is produced in the first two reactors of several reactors (such as 3) coupled in series. The matrix material is a propylene copolymer whereby the ethylene content will be typically around 0.60 wt.-%. Such material is frequently denoted mini random copolymer.

The heterophasic propylene copolymer composition (HPPC) according to the present invention usually and preferably includes at least one nucleating agent, preferably two nucleating agents namely a first nucleating agent from group (i) as described above and a second nucleating agent from group (ii) as described above. Preferably the heterophasic propylene copolymer composition (HPPC) as described herein is obtained by mixing an intermediate heterophasic propylene copolymer which is already nucleated by a second nucleating agent from group (ii) with a further nucleating agent (B) selected from group (i), most preferably the second nucleating agent being dimethylbenzylidene sorbitol and/or (bis(propylbenzylidene)propyl sorbitol.

In the following, the process for preparing the heterophasic polypropylene composition according to the present invention shall be described in more detail.

For the preparation of the heterophasic polypropylene composition according to the present invention specific catalyst systems should be used. Such catalyst systems are obtainable by a metallocene catalyst complex and a cocatalyst as described in the following.

### Catalyst

Preferred complexes of the metallocene catalyst include:
rac-dimethylsilanediylbis[2-methyl-4-(3',5'-dimethylphenyl)-5-methoxy-6-tert-butylinden-1-yl] zirconium dichloride,
rac-anti-dimethylsilanediyl[2-methyl-4-(4'-tert-butylphenyl)-inden-1-yl][2-methyl-4-(4'-tert-butylphenyl)-5-methoxy-6-tert-butylinden-1-yl] zirconium dichloride,
rac-anti-dimethylsilanediyl[2-methyl-4-(4'-tert-butylphenyl)-inden-1-yl][2-methyl-4-phenyl-5-methoxy-6-tert-butylinden-1-yl] zirconium dichloride,
rac-anti-dimethylsilanediyl[2-methyl-4-(3',5'-tert-butylphenyl)-1,5,6,7-tetrahydro-s-indacen-1-yl][2-methyl-4-(3',5'-dimethyl-phenyl)-5-methoxy-6-tert-butylinden-1-yl] zirconium dichloride,
rac-anti-dimethylsilanediyl[2-methyl-4,8-bis-(4'-tert-butylphenyl)-1,5,6,7-tetrahydro-s-indacen-1-yl][2-methyl-4-(3',5'-dimethyl-phenyl)-5-methoxy-6-tert-butylinden-1-yl] zirconium dichloride,
rac-anti-dimethylsilanediyl[2-methyl-4,8-bis-(3',5'-dimethylphenyl)-1,5,6,7-tetrahydro-s indacen-1-yl] [2-methyl-4-(3',5'-dimethylphenyl)-5-methoxy-6-tert-butylinden-1-yl] zirconium dichloride,
rac-anti-dimethylsilanediyl[2-methyl-4,8-bis-(3',5'-dimethylphenyl)-1,5,6,7-tetrahydro-s-indacen-1-yl][2-methyl-4-(3',5'-ditert-butyl-phenyl)-5-methoxy-6-tert-butylinden-1-yl] zirconium dichloride.

Especially preferred is rac-anti-dimethylsilanediyl[2-methyl-4,8-bis-(3',5'-dimethylphenyl)-1,5,6,7-tetrahydro-s indacen-1-yl] [2-methyl-4-(3',5'-dimethylphenyl)-5-methoxy-6-tert-butylinden-1-yl] zirconium dichloride.

### Cocatalyst

To form an active catalytic species it is necessary to employ a cocatalyst as is well known in the art. According to the present invention a cocatalyst system comprising a boron containing cocatalyst and an aluminoxane cocatalyst is used in combination with the above defined metallocene catalyst complex.

The aluminoxane cocatalyst can be one of formula (I): 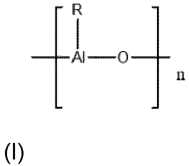 where n is from 6 to 20 and R has the meaning below.

Aluminoxanes are formed on partial hydrolysis of organoaluminum compounds, for example those of the formula AIR3, AIR2Y and AI2R3Y3 where R can be, for example, C1-C10-alkyl, preferably C1-C5-alkyl, or C3-C10-cycloalkyl, C7-C12-arylalkyl or - alkylaryl and/or phenyl or naphthyl, and where Y can be hydrogen, halogen, preferably chlorine or bromine, or C1-C10-alkoxy, preferably methoxy or ethoxy. The resulting oxygen-containing aluminoxanes are not in general pure compounds but mixtures of oligomers of the formula (I).

The preferred aluminoxane is methylaluminoxane (MAO). Since the aluminoxanes used according to the invention as cocatalysts are not, owing to their mode of preparation, pure compounds, the molarity of aluminoxane solutions hereinafter is based on their aluminium content.

Also a boron containing cocatalyst is used in combination with the aluminoxane cocatalyst.

The catalyst complex ideally comprises a co-catalyst, certain boron containing cocatalysts are preferred. Especially preferred borates of use in the invention therefore comprise the trityl, i.e. triphenylcarbenium, ion. Thus the use of Ph3CB(PhF5)4 and analogues therefore are especially favoured.

The catalyst system of the invention is used in supported form. The particulate support material used is silica or a mixed oxide such as silica-alumina, in particular silica.

The use of a silica support is preferred. The skilled man is aware of the procedures required to support a metallocene catalyst.

In a preferred embodiment, the catalyst system corresponds to the ICS3 of WO 2020/239602 A1.

The heterophasic propylene copolymer according to the present invention is made by a multistage process. It is highly recommendable to use a combination of one loop reactor and two gas phase reactors.

The process may also involve a prepolymerization step. This prepolymerization step is a conventional step used routinely in polymer synthesis.

In one embodiment, the polymerization process for producing the mini random copolymer forming the matrix employs one liquid slurry reactor combined with a prepolymerization reactor and one gas phase reactor. The elastomer phase dispersed in said matrix is made in a third reactor, preferably again a gas phase reactors.

For liquid slurry and gas phase copolymerization reactions, the reaction temperature used will generally be in the range of 70 to 90°C, the reactor pressure will generally be in the range 15 to 25 bar for gas phase reactions with liquid slurry polymerization operating at higher pressures, such as 40 to 60 bar. The residence time will generally be 0.20 to 1.0 hour for the liquid slurry reactor and 0.5 to 1.5 hours for the gas phase reactor when producing the matrix material. The gas used will be the monomer optionally as mixture with a non-reactive gas such as nitrogen or propane. It is a particular and preferred feature of the invention that C2/C3 feed ratio in the slurry liquid reactor is from 0.08 to 0.14 mol/kmol.

Generally, the quantity of catalyst used will depend upon the nature of the catalyst, the reactor types and conditions and the properties desired for the polymer product. Usually the catalyst will be fed to the prepolymerization only.

As is well known in the art hydrogen can be used for controlling the molecular weight of the polymer.

The vast majority of the SF fraction (CRYSTEX) is preferably made in a second gas phase reactor. C2/C3 feed ratio in said second gas phase reactor preferably is from 420 to 490 mol/kmol and H2/C2 ratio preferably is from 4.4 to 5.1 mol/kmol.

Production splits between the various reactors can vary and are adjusted such that the relative amounts are obtained.

Viewed from another aspect the invention provides a process for the preparation of the inventive heterophasic polypropylene copolymer comprising:
(I) polymerizing propylene in bulk in the presence of a catalyst system as herein defined to form a propylene ethylene copolymer;
(II) in the presence of said propylene ethylene copolymer and said catalyst system and in the gas phase, polymerizing propylene to form a propylene ethylene copolymer matrix (i.e. the above mentioned mini-random);
(III) in the presence of said matrix and said catalyst system and in the gas phase, polymerizing propylene and ethylene to form a heterophasic polypropylene copolymer comprising a copolymer matrix and an ethylene propylene rubber (EPR) dispersed therein.

This product preferably may be subjected to alpha nucleation.

The present invention further concerns an article comprising more than 90 wt.-%, particularly more than 95 wt.-% of the heterophasic propylene polymer composition (HPPC) as described herein. More preferably said article is an injection molded article. In particular said injection molded article is a are thin walled article having a wall thickness in the range of 0.1 to 2.0 mm, such as 0.3 to 1.5 mm, preferably 0.5 to 1.2 mm.

### Detailed description

In the following two particularly preferred embodiments shall be described.

A first particularly preferred embodiment, is concerned with
a heterophasic propylene copolymer composition (HPPC), having an MFR₂ measured according to ISO 1133 at 230 °C and 2.16 kg in the range from 45.0 to 100.0 g/10 min, comprising
(a) a propylene copolymer matrix, and
(b) an ethylene-propylene rubber being dispersed in said matrix,
   wherein the heterophasic propylene copolymer composition (HPPC) has
   (i) a melting temperature Tm, measured by DSC according to ISO 11357-3 (heating and cooling rate 10 °C/min), in the range of 150 to 154 °C; and
   (ii) a total ethylene content of the heterophasic propylene copolymer composition (HPPC) measured by Fourier Transform Infrared Spectroscopy (FTIR) during CRYSTEX analysis, in the range of 1.5 to 2.4 wt.-%; and
   (iii) a crystalline fraction (CF), determined according to CRYSTEX QC method ISO 6427 Annex B, present in an amount in the range from 83.0 to 89.0 wt.-%, relative to the total weight of the heterophasic propylene copolymer composition (HPPC); and
   (iv) a soluble fraction (SF), determined according to CRYSTEX QC method ISO 6427 Annex B, present in an amount in the range from 11.0 to 17.0 wt.-%, relative to the total weight of the heterophasic propylene copolymer composition (HPPC); and
   (v) an ethylene content of the crystalline fraction (CF), measured by Fourier Transform Infrared Spectroscopy (FTIR) during CRYSTEX analysis, in the range of 0.2 to 1.0 wt.-%;
   (vi) an ethylene content of the soluble fraction (SF), measured by Fourier Transform Infrared Spectroscopy (FTIR) during CRYSTEX analysis, in the range of 10.0 to 16.0 wt.-%; and
   (vii) an intrinsic viscosity of the soluble fraction (SF) measured according to ISO 1628-1 (at 135 °C in decalin), in the range from 2.0 to 2.6 dl/g; and
   (viii) a ratio of the intrinsic viscosity of the soluble fraction (SF) measured according to ISO 1628-1 (at 135 °C in decalin) versus the intrinsic viscosity of the crystalline fraction (CF) measured according to ISO 1628-1 (at 135 °C in decalin) IV(SF)/IV(CF) in the range of 1.0 to 3.0, and whereby
   (ix) the heterophasic propylene copolymer composition (HPPC) has a flexural modulus of 1150 to 1350 MPa according to ISO 178.

Any preferred aspect as described in the summary of the invention may be combined with this embodiment as far as appropriate. Reference is made to the aforesaid.

A second particularly preferred embodiment, is concerned with
a heterophasic propylene copolymer composition (HPPC), having an MFR₂ measured according to ISO 1133 at 230 °C and 2.16 kg in the range from 50.0 to 70.0 g/10 min, comprising
(a) a propylene copolymer matrix, and
(b) an ethylene-propylene rubber being dispersed in said matrix,
   wherein the heterophasic propylene copolymer composition (HPPC) has
   (i) a melting temperature Tm, measured by DSC according to ISO 11357-3 (heating and cooling rate 10 °C/min), in the range of 150 to 154 °C; and
   (ii) a total ethylene content of the heterophasic propylene copolymer composition (HPPC) measured by Fourier Transform Infrared Spectroscopy (FTIR) during CRYSTEX analysis, in the range of 1.5 to 2.4 wt.-%; and
   (iii) a crystalline fraction (CF), determined according to CRYSTEX QC method ISO 6427 Annex B, present in an amount in the range from 82.0 to 92.0 wt.-%, relative to the total weight of the heterophasic propylene copolymer composition (HPPC); and
   (iv) a soluble fraction (SF), determined according to CRYSTEX QC method ISO 6427 Annex B, present in an amount in the range from 8.0 to 18.0 wt.-%, relative to the total weight of the heterophasic propylene copolymer composition (HPPC); and
   (v) an ethylene content of the crystalline fraction (CF), measured by Fourier Transform Infrared Spectroscopy (FTIR) during CRYSTEX analysis, in the range of 0.2 to 1.0 wt.-%;
   (vi) an ethylene content of the soluble fraction (SF), measured by Fourier Transform Infrared Spectroscopy (FTIR) during CRYSTEX analysis, in the range of 10.0 to 16.0 wt.-%; and
   (vii) an intrinsic viscosity of the soluble fraction (SF) measured according to ISO 1628-1 (at 135 °C in decalin), in the range from 2.2 to 2.5 dl/g; and
   (viii) a ratio of the intrinsic viscosity of the soluble fraction (SF) measured according to ISO 1628-1 (at 135 °C in decalin) versus the intrinsic viscosity of the crystalline fraction (CF) measured according to ISO 1628-1 (at 135 °C in decalin) IV(SF)/IV(CF) in the range of 2.0 to 3.0

Any preferred aspect as described in the summary of the invention may be combined with this embodiment as far as appropriate. Reference is made to the aforesaid.

The invention will now be illustrated by reference to the following non-limiting Examples.

### Experimental Part

### a) Measurement methods

### aa) Melt Flow Rate

The melt flow rate (MFR₂) is determined according to ISO 1133 and is indicated in g/10min. The MFR₂ of heterophasic propylene copolymer is determined at a temperature of 230 °C and under a load of 2.16 kg.

### bb) Crystex analysis

### Crystalline and soluble fractions method

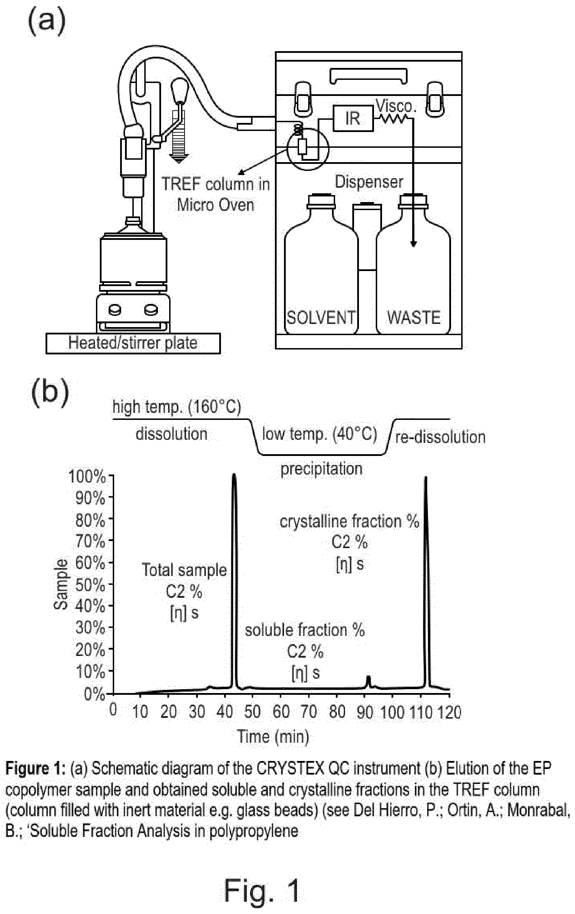

The crystalline fraction (CF) and soluble fraction (SF) of the heterophasic propylene copolymers, the final comonomer content of the heterophasic propylene copolymers, the comonomer content of the respective fractions as well as the intrinsic viscosities of the respective fractions were analyzed by the CRYSTEX QC, Polymer Char (Valencia, Spain) on basis ISO 6427 Annex B: 1992 (E). A schematic representation of the CRYSTEX QC instrument is shown in Figure 1a. The crystalline and amorphous fractions are separated through temperature cycles of dissolution in 1,2,4-trichlorobenzene (1,2,4-TCB) at 160 °C, crystallization at 40 °C and re-dissolution in 1,2,4-TCB at 160 °C as shown in Figure 1b. Quantification of SF and CF and determination of ethylene content (C2) are achieved by means of an infrared detector (IR4) and an online 2-capillary viscometer is used for the determination of the intrinsic viscosity (iV). IR4 detector is a multiple wavelength detector measuring IR absorbance at two different bands (CH₃ stretching vibration (centred at approx. 2960 cm⁻¹) and CHₓ stretching vibration (2700-3000 cm⁻¹) which can be used to determine of the concentration and the ethylene content in ethylene-propylene copolymers (EP Copolymers). The IR4 detector is calibrated with series of 8 ethylene-propylene copolymers with known ethylene content in the range of 2 wt.-% to 69 wt.-% (determined by ¹³C-NMR) and each at various concentrations, in the range of 2 and 13 mg/ml. To account for both features, concentration and ethylene content at the same time for various polymer concentration expected during Crystex analyses the following calibration equations were applied: Equation 1: $\begin{matrix}Cons = a + b * Abs \left(CH\right) + c * {\left(Abs\left({CH}_{x}\right)\right)}^{2} + d * Abs \left({CH}_{3}\right) + e * {\left(Abs\left({CH}_{3}\right)\right)}^{2} + \\ f * Abs \left({CH}_{x}\right) * Abs \left({CH}_{3}\right)\end{matrix}$ Equation 2: 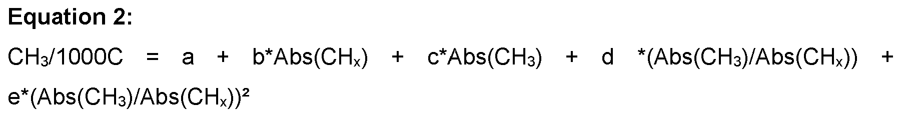 CH3/1000C = a + b*Abs(CHx) + c*Abs(CH3) + d *(Abs(CH3)/Abs(CHx)) + e*(Abs(CH3)/Abs(CHx))2

The constants a to e for equation 1 and a to f for equation 2 were determined by using least square regression analysis.

### Equation 3:

The CH3/1000C is converted to the ethylene content in wt.-% using following relationship:$wt . - % \left(Ethylene in EP Copolymers\right) = 100 - CH 3 / 1000 TC ∗ 0.3$

Amount of soluble fraction (SF) and crystalline fraction (CF) are correlated through the XS calibration to the "Xylene Cold Soluble" (XCS) fraction and "Xylene Cold Insoluble" (XCI) fraction, respectively, determined according to standard gravimetric method as per ISO16152. XS calibration is achieved by testing various EP copolymers with xylene cold soluble (XCS) content in the range 2 to 31 wt.-%. The determined XS calibration is linear (Equation 4): $wt . - % XCS = 1.01 * wt . - % SF$

Intrinsic viscosity (IV) of the parent heterophasic propylene copolymer and its soluble fraction (SF) and crystalline fraction (CF) are determined with a use of an online 2-capillary viscometer and are correlated to corresponding IV's determined by standard method in decalin according to ISO 1628-3. Calibration is achieved with various EP copolymers with IV = 2 to 4 dl/g. The determined calibration curve between the Vsp, measured in CRYSTEX QC and normalized by the concentration (c), and the IV is linear (Equation 5): $IV \left(dl/g\right) = a * Vsp / c$ with a slope of a = 16.2. A sample of the heterophasic propylene copolymer to be analyzed is weighed out in concentrations of 10 mg/ml to 20 mg/ml. After automated filling of the vial with 1,2,4-TCB containing 250 mg/l 2,6-tert-butyl-4-methylphenol (BHT) as antioxidant, the sample is dissolved at 160 °C until complete dissolution is achieved, usually for 60 min, with constant stirring of 400 rpm. To avoid sample degradation, polymer solution is blanketed with the N₂ atmosphere during dissolution.

As shown in Figure 1a and b, a defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt.-%] of the heterophasic propylene copolymer. During the second injection the soluble fraction (SF; at low temperature, 40 °C) and the crystalline fraction (CF; at high temperature, 160 °C) with the crystallization cycle are measured (wt.-% SF, wt.-% C2 of SF, IV of SF).

### ¹³C NMR spectroscopy-based determination of C2 content for the calibration standards

Quantitative ¹³C{¹H} NMR spectra were recorded in the solution-state using a Bruker Avance III 400 NMR spectrometer operating at 400.15 and 100.62 MHz for ¹H and ¹³C respectively. All spectra were recorded using a ¹³C optimised 10 mm extended temperature probehead at 125 °C using nitrogen gas for all pneumatics. Approximately 200 mg of material was dissolved in 3 ml of *1,2*-tetrachloroethane-*d*₂ (TCE-*d₂*) along with chromium (III) acetylacetonate (Cr(acac)₃) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225, Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative ¹³C{¹H} NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed (Cheng, H. N., Macromolecules 17 (1984), 1950) and the comonomer fraction calculated as the fraction of ethylene in the polymer with respect to all monomer in the polymer: $fE = \left(E/\left(P+E\right)\right)$

The comonomer fraction was quantified using the method of Wang et. al. (Wang, W-J., Zhu, S., Macromolecules 33 (2000), 1157) through integration of multiple signals across the whole spectral region in the ¹³C{¹H} spectra. This method was chosen for its robust nature and ability to account for the presence of regio-defects when needed. Integral regions were slightly adjusted to increase applicability across the whole range of encountered comonomer contents. For systems with very low ethylene content where only isolated ethylene in PPEPP sequences were observed the method of Wang et. al. was modified reducing the influence of integration of sites that are no longer present. This approach reduced the overestimation of ethylene content for such systems and was achieved by reduction of the number of sites used to determine the absolute ethylene content to $E = 0.5 \left(Sββ+Sβγ+Sβδ+0.5\left(Sαβ+Sαγ\right)\right)$

Through the use of this set of sites the corresponding integral equation becomes $E = 0.5 \left({I}_{H}+{I}_{G}+0.5\left({I}_{C}+{I}_{D}\right)\right)$ using the same notation used in the article of Wang et. al. (Wang, W-J., Zhu, S., Macromolecules 33 (2000), 1157). Equations used for absolute propylene content were not modified. The mole percent comonomer incorporation was calculated from the mole fraction: $E \left[mol%\right] = 100 * fE .$

The weight percent comonomer incorporation was calculated from the mole fraction: $E \left[wt%\right] = 100 * \left(fE*28.06\right) / \left(\left(fE*28.06\right)+\left(\left(1-fE\right)*42.08\right)\right)$

### cc) Intrinsic viscosity

The intrinsic viscosity (iV) is measured in analogy to DIN ISO 1628/1, October 1999, in Decalin at 135 °C.

### dd) Melting temperature Tₘ and crystallization temperature T_{c}

The melting temperature Tₘ is determined by differential scanning calorimetry (DSC) according to ISO 11357-3 with a TA-Instruments 2920 Dual-Cell with RSC refrigeration apparatus and data station. A heating and cooling rate of 10 °C/min is applied in a heat/cool/heat cycle between +23 and +210 °C. The crystallization temperature (T_{c}) is determined from the cooling step while melting temperature (Tₘ) and melting enthalpy (Hₘ) are being determined in the second heating step.

### ee) Notched impact strength (NIS)

The Charpy notched impact strength (NIS) was measured according to ISO 179 1 eA at -20 °C and +23 °C, using injection molded bar test specimens of 80x10x4 mm³ prepared in accordance with ISO 294-1: 1996.

### ff) Flexural Modulus

The flexural modulus was determined in 3-point-bending at 23 °C according to ISO 178 on 80x10x4 mm³ test bars injection molded in line with EN ISO 1873-2.

### gg) haze

was determined according to ASTM D1003-00 on 60x60x1 mm³ plaques injection molded in line with EN ISO 1873-2 using a melt temperature of 230°C.

### hh) Preparation of 840 ml cups

With the polymers as defined below cups were produced by injection molding using an Engel speed 180 machine with a 35 mm barrier screw (supplied by Engel Austria GmbH). The melt temperature was adjusted to 245°C and the mould temperature to 10°C; an injection speed of 770 cm³/s with an injection time of 0.08 s was used, followed by a holding pressure time of 0.1 s with 1300 bar (decreasing to 800 bar) and a cooling time of 1.5 s, giving a standard cycle time of 3.8 s. The dimensions of the cup are as follows: Height 100 mm, diameter top 115 mm, diameter bottom 95 mm, bottom wall thickness 0.44 mm, side-wall thickness 0.40 mm.

### hh) drop height test

Cups were filled with water, lifted to a certain height and then dropped down. If they did not collapse, the height was increased. In case of a failure it was decreased. Generally, the test can be divided into a pre- and a main test phase:
The pre-test phase is used to determine the starting height of the main test phase. 10 cups are needed for this test phase. In this test phase only 1 cup is tested for a selected drop height. The starting height in the pre-test phase is selected according to the material type and previous test results. In case of a cup failure, the drop height will be reduced by 10 cm. If the cup stands the test, the height is increased by 10 cm. If all the 10 cups are tested, the start height for the main test is set to the highest height of the pre-test which led to a non-failure of the cup.

During the main test, two cups are tested simultaneously at each height. The procedure of increasing / decreasing the test height is similar to the pre-test phase. The only add-on is, that if one cup stands and one fails at a certain drop height, the test height will stay constant. 20 cups are tested during the main test phase. The drop height is afterwards determined using the formula below: $drop height = \frac{\sum \left(number of cups@certain height\right) \times height}{total number of tested cups}$

### jj) compression test

The test was performed by compressing cups between two plates attached to a universal testing machine with a test speed of 10 mm/min according to an internal procedure in general agreement with ASTM D642. For testing, the cup is placed upside down (i.e. with the bottom facing the moving plate) into the test setup and compressed to the point of collapse which is noticed by a force drop on the force-deformation curve, for which the maximum force is noted. At least 8 cups are tested to determine an average result.

### b) Experiments - Preparation of the heterophasic propylene copolymers

### ba) Preparation of the catalyst systems (catalyst system 1 for inventive example IE1 and comparative example CE1)

### Catalyst synthesis

The metallocene (MC) used was Anti-dimethylsilanediyl[2-methyl-4,8-di(3,5-dimethylphenyl)-1,5,6,7-tetrahydro-s-indacen-1-yl][2-methyl-4-(3,5-dimethylphenyl)-5-methoxy-6-tert-butylinden-1-yl] zirconium dichloride as disclosed in WO2020/239602.

### Preparation of MAO-silica support (as described in WO2020/239602 at page 57)

A steel reactor equipped with a mechanical stirrer and a filter net was flushed with nitrogen and the reactor temperature was set to 20 °C. Next silica grade DM-L-303 from AGC Si-Tech Co, pre-calcined at 600 °C (5.0 kg) was added from a feeding drum followed by careful pressuring and depressurising with nitrogen using manual valves. Then toluene (22 kg) was added. The mixture was stirred for 15 min. Next 30 wt% solution of MAO in toluene (9.0 kg) from Lanxess was added via feed line on the top of the reactor within 70 min. The reaction mixture was then heated up to 90°C and stirred at 90 °C for additional two hours. The slurry was allowed to settle and the mother liquor was filtered off. The catalyst was washed twice with toluene (22 kg) at 90°C, following by settling and filtration. The reactor was cooled off to 60°C and the solid was washed with heptane (22.2 kg). Finally MAO treated SiO2 was dried at 60° under nitrogen flow for 2 hours and then for 5 hours under vacuum (-0.5 barg) with stirring. MAO treated support was collected as a free-flowing white powder found to contain 12.2% Al by weight.

### Catalyst preparation (as described in WO2020/239602 as ICS3)

30 wt% MAO in toluene (0.7 kg) was added into a steel nitrogen blanked reactor via a burette at 20 °C. Toluene (5.4 kg) was then added under stirring. The MC as cited above (93 g) was added from a metal cylinder followed by flushing with 1 kg toluene. The mixture 5 was stirred for 60 minutes at 20 °C . Trityl tetrakis(pentafluorophenyl) borate (91 g) was then added from a metal cylinder followed by a flush with 1 kg of toluene. The mixture was stirred for 1 h at room temperature. The resulting solution was added to a stirred cake of MAO-silica support prepared as described above over 1 hour. The cake was allowed to stay for 12 hours, followed by drying under N2 flow at 60°C for 2h and additionally for 5 h under vacuum (-0.5 barg) under stirring. Dried catalyst was sampled in the form of pink free flowing powder containing 13.9% Al by weight and 0.11% Zr by weight.

### bb) Preparation of the catalyst systems (for comparative examples CE4 and CE5)

For polymerizing the homopolymer of comparative examples CE4 and CE5 the catalyst system as described in IE2 in WO 2019/179959 A1.

### bc) Preparation of inventive polymer

**Table 1: Polymerization conditions for IE1**

| | | **IE1** | **IE2** |
|---|---|---|---|
| **Catalyst system** | | 1 as described above | 1 as described above |
| **Prepolymerization** | | | |
| Temperature | [°C] | 20 | 20 |
| H2/C3 ratio | [mol/kmoll] | 0.07 | 0.07 |
| catalyst feed | [g/h] | 7.0 | 7.0 |

| **Loop (Reactor 1)** | | | |
|---|---|---|---|
| Temperature | [°C] | 75 | 75 |
| Pressure | [kPa] | 5320 | 5310 |
| H2/C3 ratio | [mol/kmol] | 0.76 | 0.73 |
| C2/C3 ratio | [mol/kmol] | 0.11 | 0.11 |
| Loop reactor split | [wt.-%] | 39 | 46 |
| MFR₂ | [g/10min] | 177 | 289 |

| **GPR1 (Reactor 2)** | | | |
|---|---|---|---|
| Temperature | [°C] | 80 | 80 |
| Pressure | [kPa] | 2200 | 2200 |
| H2/C3 ratio | [mol/kmol] | 2.86 | 2.92 |
| GPR1 reactor split | [wt.-%] | 39 | 33 |
| XCS after GPR1 | [wt.-%] | 0.15 | |
| MFR₂ | [g/10min] | 255 | 210 |

| **GPR2 (Reactor 3)** | | | |
|---|---|---|---|
| Temperature | [°C] | 70 | 70 |
| Pressure | [kPa] | 2500 | 2500 |
| H2/C2 ratio | [mol/kmol] | 4.9 | 4.7 |
| C2/C3 ratio | [mol/kmol] | 461 | 460 |
| GPR2 reactor split | [wt.-%] | 22 | 21 |

The product from GPR2 (reactor 3) was compounded and pelletized in the presence of a conventional additive package including antioxidant (Irganox 1010 [Pentaerythrityltetrakis(3-(3',5'-di-tert. butyl-4-hydroxyphenyl)-propionate] 315 ppm; Irgafos 168 [Tris (2,4-di-t-butylphenyl) phosphite] 630 ppm and acid scavenger (Ca stearate CAS no.1592-23-0, Faci SpA, Italy; 945 ppm). Alpha nucleation was effected by 1,3:2,4 Bis(3,4-dimethylbenzylidene) sorbitol (CAS 135861-56-2) in an amount of 2000 ppm. As an antistatic agent dimodan (CAS 97593-29-8) was incorporated in an amount of 1500 ppm.

In comparative example CE1 the same catalyst system as for inventive examples IE1 and IE2 was used but no dispersed phase was produced in CE1, i.e. matrix phase only.

In comparative example CE2 again the same catalyst system as for inventive examples IE1 and IE2 was used. However, the amount of dispersed phase was relatively high (about 22 wt.-%). CE3 compares IE1 of WO2020011825A1. CE4 is a heterophasic polypropylene copolymer made by the second (comparative) catalyst as described above. CE5 is a random polypropylene copolymer (i.e. not containing a dispersed phase) made from said second (comparative) catalyst again as described above.

**Table 2: Results**

| | IE1 | IE2 | CE1 | CE2 | CE3 | CE4 | CE5 | CE6* |
|---|---|---|---|---|---|---|---|---|
| Catalyst system | 1 | 1 | 1 | 1 | cf. ref. | 2 | 2 | 1 |
| MFR(HPPC) g/10min, ISO 1133; 230°; 2.16kg | 58 | 58 | 31 | 168 | 2.7 | 2.8 | 70 | 90 |
| heterophasic ? | yes | yes | no | yes | yes | yes | no | Yes |
| Tm (DSC; 10°C) ISO 11357-3 °C | 153 | 153 | 153 | 153 | 161 | 166 | 158 | 154 |
| total ethylene wt.-% | 2.1 | 2.0 | 3.2 | n.d. | 2.3 | 5.5 | 4.0 | 1.9 |

**Table 2 continued: Results**

| | IE1 | IE2 | CE1 | CE2 | CE3 | CE4 | CE5 | CE6* |
|---|---|---|---|---|---|---|---|---|
| CF (Crystex QC) wt.-% | 85.0 | 87.0 | 81.0 | nd | 88.2 | 86.1 | 93.0 | 89.4 |
| SF (Crystex QC) wt.-% | 15.0 | 13.0 | 19.0 | nd | 11.8 | 13.9 | 7.0 | 10.6 |
| C2(CF) FTIR wt.-% | 0.9 | 0.9 | 0.9 | nd | 1.3 | 2.2 | nd | nd |
| C2(SF) FTIR wt.-% | 12.5 | 11.9 | 11.5 | nd | 11.8 | 13.9 | 7.0 | 23.3 |
| IV(SF) dl/g; | 2.39 | 2.43 | 2.65 | nd | 1.90 | 1.67 | nd | 2.4 |
| IV(CF) dl/g; | 1.07 | 1.09 | 1.08 | nd | 2.3 | 2.7 | nd | 1.1 |
| IV(SF) / IV (CF) | 2.23 | 2.22 | 2.45 | nd | 0.82- | 0.62 | nd | 2.18 |
| Flexural modulus ISO 178; MPa | 1186 | 1232 | 1017 | 1425 | nd | 1400 | 1090 | 1138 |
| Alpha nucleating agent: Millad 3988 | Yes 0.2 wt.-% | Yes 0.2 wt.-% | Yes 0.2 wt.-% | Yes 0.2 wt.-% | | | | |
| Charpy NIS 23°C kJ/m² | 3.04 | 2.95 | 3.62 | 1.5 | 19.7 | 24 | 4.5 | |
| Charpy NIS - 20°C kJ/m | 0.92 | 0.91 | 0.94 | 0.80 | 1.0 | 1.5 | nd | |
| Haze (1mm; 230°C) % | 14 | 16 | 14 | 65 | 37 | 35 | 13 | 37 |

| | | | | | | | | |
|---|---|---|---|---|---|---|---|---|
| *CE6 = EP2812405; PP-A2 | | | | | | | | |

**Table 2 continued: Results**

| | IE1 | IE2 | CE1 | CE2 | CE3 | CE4 | CE5 |
|---|---|---|---|---|---|---|---|
| drop test performance | | | | | | | |
| drop height 24h | 0.42 | 0.49 | | | | | |
| drop height 48 | 0.70 | 0.60 | | | | | |
| drop height 96h | 0.58 | 0.70 | | | | | |
| drop height 1 week | 0.52 | 0.54 | | | | | |
| drop test 24h vs. 1 week | minus 24% | minus 10% | | | | | |

| Compression test | | | | | | | |
|---|---|---|---|---|---|---|---|
| Maximum force | 185 | 193 | | | | | |
| force at 1mm deflection | 163 | 167 | | | | | |
| force at 2mm deflection | 159 | 165 | | | | | |
| force at 3mm deflection | 131 | 141 | | | | | |
| Delta 3 mm vs. max | 29% | 27% | | | | | |
| | | | | | | | |

**Table 2a: Further comparative results vis-à-vis IE1 and IE2**

| | IE1 | IE2 | CE7** | CE8*** |
|---|---|---|---|---|
| Catalyst system | 1 | 1 | 1 | 1 |
| MFR(HPPC) g/10min, ISO 1133; 230°; 2.16kg | 58 | 58 | 53 | 82 |
| heterophasic ? | yes | yes | yes | Yes |
| Tm (DSC; 10°C) ISO 11357-3 °C | 153 | 153 | 154 | 154 |
| total ethylene wt.-% | 2.1 | 2.0 | 3.5 | 2.6 |
| CF (Crystex QC) wt.-% | 85.0 | 87.0 | 84.5 | 88.9 |
| SF (Crystex QC) wt.-% | 15.0 | 13.0 | 15.5 | 11.1 |
| C2(CF) FTIR wt.-% | 0.9 | 0.9 | 1.1 | 1.1 |
| C2(SF) FTIR wt.-% | 12.5 | 11.9 | 18.1 | 19.4 |
| IV(SF) dl/g; | 2.39 | 2.43 | 2.6 | 2.0 |
| IV(CF) dl/g; | 1.07 | 1.09 | 1.4 | 1.1 |
| IV(SF) / IV (CF) | 2.23 | 2.22 | 1.86 | 1.82 |
| Flexural modulus ISO 178; MPa | 1186 | 1232 | 993 | 1131 |
| Alpha nucleating agent: Millad 3988 | Yes 0.2 wt.-% | Yes 0.2 wt.-% | - | - |
| Charpy NIS 23°C kJ/m² | 3.04 | 2.95 | 6.6 | 4.5 |
| Charpy NIS - 20°C kJ/m | 0.92 | 0.91 | | |
| Haze (1mm; 230°C) % | 14 | 16 | 35 | 34 |

| | | | | |
|---|---|---|---|---|
| **CE7 from EP3812404, IE1 ***CE8 from EP3812404, IE3 | | | | |

It can be seen that the inventive composition IE1 and IE2 had a surprisingly low haze for the good stiffness (flexural modulus). CE1 could not convince as to the stiffness although haze was also good. CE2, CE3 and CE4 all had very good stiffness at inacceptable haze. CE5 had good haze but too low stiffness. The drop tests also showed a lower variation upon storage for IE1/IE2 versus CE5. The same was surprisingly found in force deflection tests when comparing force at 3 mm deflection versus maximum force.

CE6 also showed acceptable stiffness but too high haze. CE7 and CE8 also had inacceptable high haze and rather low stiffness / acceptable stiffness respectively.

## Claims

1. A heterophasic propylene copolymer composition (HPPC), having an MFR₂ measured according to ISO 1133 at 230 °C and 2.16 kg in the range from 45.0 to 100.0 g/10 min, comprising
(a) a propylene copolymer matrix, and
(b) an ethylene-propylene rubber being dispersed in said matrix,
wherein the heterophasic propylene copolymer composition (HPPC) has
(i) a melting temperature Tm, measured by DSC according to ISO 11357-3 (heating and cooling rate 10 °C/min), in the range of 150 to 154 °C; and
(ii) a total ethylene content of the heterophasic propylene copolymer composition (HPPC) measured by Fourier Transform Infrared Spectroscopy (FTIR) during CRYSTEX analysis, in the range of 1.5 to 2.4 wt.-%; and
(iii) a crystalline fraction (CF), determined according to CRYSTEX QC method ISO 6427 Annex B, present in an amount in the range from 82.0 to 92.0 wt.-%, relative to the total weight of the heterophasic propylene copolymer composition (HPPC); and
(iv) a soluble fraction (SF), determined according to CRYSTEX QC method ISO 6427 Annex B, present in an amount in the range from 8.0 to 18.0 wt.-%, relative to the total weight of the heterophasic propylene copolymer composition (HPPC); and
(v) an ethylene content of the crystalline fraction (CF), measured by Fourier Transform Infrared Spectroscopy (FTIR) during CRYSTEX analysis, in the range of 0.2 to 1.0 wt.-%;
(vi) an ethylene content of the soluble fraction (SF), measured by Fourier Transform Infrared Spectroscopy (FTIR) during CRYSTEX analysis, in the range of 10.0 to 16.0 wt.-%; and
(vii) an intrinsic viscosity of the soluble fraction (SF) measured according to ISO 1628-1 (at 135 °C in decalin), in the range from 2.0 to 2.6 dl/g; and
(viii) a ratio of the intrinsic viscosity of the soluble fraction (SF) measured according to ISO 1628-1 (at 135 °C in decalin) versus the intrinsic viscosity of the crystalline fraction (CF) measured according to ISO 1628-1 (at 135 °C in decalin) IV(SF)/IV(CF) in the range of 1.0 to 3.0.

2. The heterophasic propylene copolymer composition (HPPC) according to claim 1, having a flexural modulus of 1150 to 1350 MPa measured according to ISO 178.

3. The heterophasic propylene copolymer composition (HPPC) according to claim 1 or 2 being alpha nucleated.

4. The heterophasic propylene copolymer composition (HPPC) according to claim 3 containing dimethylbenzylidene sorbitol and/or (bis(propylbenzylidene)propyl sorbitol.

5. The heterophasic propylene copolymer composition (HPPC) according to claims 3 or 4 containing at least one polymeric nucleating agent, preferably at least one of poly(vinyl cyclohexane) (PVCH) and poly (vinyl cyclopentane) (PVCP).

6. The heterophasic propylene copolymer composition (HPPC) according to any one of the preceding claims, having
(ii) a crystalline fraction (CF), determined according to CRYSTEX QC method ISO 6427 Annex B, present in an amount in the range from 83.0 to 89.0 wt.-%, relative to the total weight of the heterophasic propylene copolymer composition (HPPC); and
(iii) a soluble fraction (SF), determined according to CRYSTEX QC method ISO 6427 Annex B, present in an amount in the range from 11.0 to 17.0 wt.-%, relative to the total weight of the heterophasic propylene copolymer composition (HPPC).

7. The heterophasic propylene copolymer composition (HPPC) according to any one of the preceding claims, having
(iv) an intrinsic viscosity of the soluble fraction (SF) measured according to ISO 1628-1 (at 135 °C in decalin), in the range from 2.2 to 2.5 dl/g.

8. The heterophasic propylene copolymer composition (HPPC) according to any one of the preceding claims, having
(v) a ratio of the intrinsic viscosity of the soluble fraction (SF) measured according to ISO 1628-1 (at 135 °C in decalin) versus the intrinsic viscosity of the crystalline fraction (CF) measured according to ISO 1628-1 (at 135 °C in decalin) IV(SF)/IV(CF) in the range of 2.0 to 3.0.

9. The heterophasic propylene copolymer composition (HPPC) according to any one of the preceding claims, having a haze of a 1 mm thick test specimen as determined at 230 °C of less than 20 percent (ASTM D1003-00).

10. The heterophasic propylene copolymer composition (HPPC) according to any one of the preceding claims, having an MFR₂ measured according to ISO 1133 at 230 °C and 2.16 kg in the range from 50.0 to 70.0 g/10 min.

11. The heterophasic propylene copolymer composition (HPPC) according to any one of the preceding claims, wherein the ethylene content of the soluble fraction (SF), measured by Fourier Transform Infrared Spectroscopy (FTIR) during CRYSTEX analysis is in the range of 11.0 to 14.0 wt.-%;

12. The heterophasic propylene copolymer composition (HPPC) according to any one of the preceding claims obtainable by a multistage process, whereby in the first two stages the matrix is produced.

13. The heterophasic propylene copolymer composition (HPPC) according to any one of the preceding claims obtainable by mixing an intermediate heterophasic propylene copolymer with at least one alpha nucleating agent (B) selected from the group consisting of dimethylbenzylidene sorbitol, (bis(propylbenzylidene)propyl sorbitol and mixtures thereof.

14. An article comprising more than 90 wt.-%, particularly more than 95 wt.-% of the heterophasic propylene polymer composition (HPPC) according to any one of the preceding claims.

15. The article according to claim 14 being a molded article, preferably an injection molded article.

## Patentansprüche

1. Eine heterophasische Propylen-Copolymer-Zusammensetzung (HPPC) mit einem gemäß ISO 1133 bei 230 °C und 2,16 kg gemessenen MFR₂ im Bereich von 45,0 bis 100,0 g/10 min, bestehend aus:
(a) einer Propylen-Copolymer-Matrix und
(b) einem in der Matrix dispergierten Ethylen-Propylen Kautschuk,
wobei die heterophasische Propylen-Copolymer-Zusammensetzung (HPPC)
(i) eine Schmelztemperatur Tm, gemessen mittels DSC gemäß ISO 11357-3 (Heiz- und Abkühlgeschwindigkeit 10 °C/min), im Bereich von 150 bis 154 °C; und
(ii) einen Gesamt-Ethylengehalt der heterophasischen Propylen-Copolymer-Zusammensetzung (HPPC), gemessen mittels Fourier-Transform-InfrarotSpektroskopie (FTIR) während der CRYSTEX-Analyse, im Bereich von 1,5 bis 2,4 Gew.-%; und
(iii) einen kristalline Fraktion (CF), bestimmt gemäß der CRYSTEX-QC-Methode ISO 6427 Anhang B, der in einer Menge im Bereich von 82,0 bis 92,0 Gew.-%, bezogen auf das Gesamtgewicht der heterophasischen Propylen-Copolymer-Zusammensetzung (HPPC); und
(iv) eine lösliche Fraktion (SF), bestimmt gemäß der CRYSTEX-QC-Methode ISO 6427 Anhang B, die in einer Menge im Bereich von 8,0 bis 18,0 Gew.-%, bezogen auf das Gesamtgewicht der heterophasischen Propylen-Copolymer-Zusammensetzung (HPPC); und
(v) einen Ethylengehalt der kristallinen Fraktion (CF), gemessen mittels Fourier-Transform-Infrarotspektroskopie (FTIR) während der CRYSTEX-Analyse, im Bereich von 0,2 bis 1,0 Gew.-%;
(vi) einen Ethylengehalt der löslichen Fraktion (SF), gemessen mittels Fourier-Transform-Infrarotspektroskopie (FTIR) während der CRYSTEX-Analyse, im Bereich von 10,0 bis 16,0 Gew.-%; und
(vii) eine intrinsische Viskosität der löslichen Fraktion (SF), gemessen gemäß ISO 1628-1 (bei 135 °C in Decalin), im Bereich von 2,0 bis 2,6 dl/g; und
(viii)ein Verhältnis der gemäß ISO 1628-1 (bei 135 °C in Decalin) gemessenen intrinsischen Viskosität der löslichen Fraktion (SF) zur gemäß ISO 1628-1 (bei 135 °C in Decalin) gemessenen intrinsischen Viskosität der kristallinen Fraktion (CF) IV(SF)/IV(CF) im Bereich von 1,0 bis 3,0 aufweist.

2. Die heterophasische Propylen-Copolymer-Zusammensetzung (HPPC) gemäß Anspruch 1, die ein Biegemodul von 1150 bis 1350 MPa aufweist, gemessen gemäß ISO 178.

3. Die heterophasische Propylen-Copolymer-Zusammensetzung (HPPC) gemäß Anspruch 1 oder 2, welche alpha-nukleiert ist.

4. Die heterophasische Propylen-Copolymer-Zusammensetzung (HPPC) gemäß Anspruch 3, die Dimethylbenzylidensorbit und/oder (Bis(propylbenzyliden)propylsorbit enthält.

5. Die heterophasische Propylen-Copolymer-Zusammensetzung (HPPC) gemäß Anspruch 3 oder 4, die mindestens ein polymeres Nukleierungsmittel enthält, vorzugsweise mindestens eines von Poly(vinylcyclohexan) (PVCH) und Poly(vinylcyclopentan) (PVCP).

6. Die heterophasische Propylen-Copolymer-Zusammensetzung (HPPC) gemäß einem der vorstehenden Ansprüche, die
(ii) einen kristallinen Anteil (CF), bestimmt gemäß der CRYSTEX-QC-Methode ISO 6427 Anhang B, der in einer Menge im Bereich von 83,0 bis 89,0 Gew.-%, bezogen auf das Gesamtgewicht der heterophasischen Propylen-Copolymer-Zusammensetzung (HPPC); und
(iii) einen löslichen Anteil (SF), bestimmt gemäß der CRYSTEX-QC-Methode ISO 6427 Anhang B, der in einer Menge im Bereich von 11,0 bis 17,0 Gew.-%, bezogen auf das Gesamtgewicht der heterophasischen Propylen-Copolymer-Zusammensetzung (HPPC) aufweist.

7. Die heterophasische Propylen-Copolymer-Zusammensetzung (HPPC) gemäß einem der vorstehenden Ansprüche, mit
(iv) einer intrinsischen Viskosität der löslichen Fraktion (SF), gemessen gemäß ISO 1628-1 (bei 135 °C in Decalin), im Bereich von 2,2 bis 2,5 dl/g.

8. Die heterophasische Propylen-Copolymer-Zusammensetzung (HPPC) gemäß einem der vorstehenden Ansprüche, die
(v) ein Verhältnis der intrinsischen Viskosität der löslichen Fraktion (SF), gemessen gemäß ISO 1628-1 (bei 135 °C in Decalin), zur intrinsischen Viskosität der kristallinen Fraktion (CF), gemessen gemäß ISO 1628-1 (bei 135 °C in Decalin), IV(SF)/IV(CF) im Bereich von 2,0 bis 3,0
aufweist.

9. Die heterophasische Propylen-Copolymer-Zusammensetzung (HPPC) gemäß einem der vorstehenden Ansprüche, die eine bei 230 °C bestimmte Trübung eines 1 mm dicken Prüfkörpers von weniger als 20 Prozent aufweist (ASTM D1003-00).

10. Die heterophasische Propylen-Copolymer-Zusammensetzung (HPPC) gemäß einem der vorstehenden Ansprüche, die einen MFR₂ - gemessen gemäß ISO 1133 bei 230 °C und 2,16 kg - im Bereich von 50,0 bis 70,0 g/10 min aufweist.

11. Die heterophasische Propylen-Copolymer-Zusammensetzung (HPPC) gemäß einem der vorstehenden Ansprüche, wobei der Ethylengehalt der löslichen Fraktion (SF), gemessen mittels Fourier-Transform-Infrarotspektroskopie (FTIR) während der CRYSTEX-Analyse, im Bereich von 11,0 bis 14,0 Gew.-% liegt.

12. Die heterophasische Propylen-Copolymer-Zusammensetzung (HPPC) gemäß einem der vorstehenden Ansprüche, erhältlich durch ein mehrstufiges Verfahren, wobei in den ersten beiden Stufen die Matrix hergestellt wird.

13. Die heterophasische Propylen-Copolymer-Zusammensetzung (HPPC) gemäß einem der vorstehenden Ansprüche, erhältlich durch Mischen eines heterophasischen Propylen-Copolymer-Zwischenprodukts mit mindestens einem Alpha-Nukleierungsmittel (B), ausgewählt aus der Gruppe bestehend aus Dimethylbenzylidensorbit, (Bis(propylbenzyliden)propylsorbit und Mischungen davon.

14. Ein Gegenstand, der mehr als 90 Gew.-%, insbesondere mehr als 95 Gew.-%, der heterophasischen Propylenpolymerzusammensetzung (HPPC) gemäß einem der vorstehenden Ansprüche enthält.

15. Der Gegenstand gemäß Anspruch 14 wobei der Gegenstand ein Formteil, vorzugsweise ein Spritzgussformteil, ist.

## Revendications

1. Composition de copolymère de propylène hétérophasique (HPPC), présentant un MFR₂ mesuré selon l'ISO 1133 à 230 °C et 2,16 kg dans la plage de 45,0 à 100,0 g/10 min, comprenant
(a) une matrice de copolymère de propylène, et
(b) un caoutchouc d'éthylène-propylène dispersé dans ladite matrice, dans laquelle la composition de copolymère de propylène hétérophasique (HPPC) présente
(i) une température de fusion Tm, mesurée par DSC selon l'ISO 11357-3 (vitesse de chauffage et de refroidissement de 10 °C/min), dans la plage de 150 à 154 °C ; et
(ii) une teneur totale en éthylène de la composition de copolymère de propylène hétérophasique (HPPC) mesurée par spectroscopie infrarouge à transformée de Fourier (FTIR) pendant une analyse CRYSTEX, dans la plage de 1,5 à 2,4 % en poids ; et
(iii) une fraction cristalline (CF), déterminée selon le procédé CRYSTEX QC ISO 6427 Annexe B, présente en une quantité dans la plage de 82,0 à 92,0 % en poids, par rapport au poids total de la composition de copolymère de propylène hétérophasique (HPPC) ; et
(iv) une fraction soluble (SF), déterminée selon le procédé CRYSTEX QC ISO 6427 Annexe B, présente en une quantité dans la plage de 8,0 à 18,0 % en poids, par rapport au poids total de la composition de copolymère de propylène hétérophasique (HPPC) ; et
(v) une teneur en éthylène de la fraction cristalline (CF), mesurée par spectroscopie infrarouge à transformée de Fourier (FTIR) pendant une analyse CRYSTEX, dans la plage de 0,2 à 1,0 % en poids ;
(vi) une teneur en éthylène de la fraction soluble (SF), mesurée par spectroscopie infrarouge à transformée de Fourier (FTIR) pendant une analyse CRYSTEX, dans la plage de 10,0 à 16,0 % en poids ; et
(vii) une viscosité intrinsèque de la fraction soluble (SF), mesurée selon l'ISO 1628-1 (à 135 °C dans la décaline), dans la plage de 2,0 à 2,6 dl/g ; et
(viii) un rapport entre la viscosité intrinsèque de la fraction soluble (SF) mesurée selon l'ISO 1628-1 (à 135 °C dans la décaline) et la viscosité intrinsèque de la fraction cristalline (CF) mesurée selon l'ISO 1628-1 (à 135 °C dans la décaline) IV(SF)/IV(CF) dans la plage de 1,0 à 3,0.

2. Composition de copolymère de propylène hétérophasique (HPPC) selon la revendication 1, présentant un module d'élasticité en flexion de 1150 à 1350 MPa mesuré selon l'ISO 178.

3. Composition de copolymère de propylène hétérophasique (HPPC) selon la revendication 1 ou 2 alpha-nucléée.

4. Composition de copolymère de propylène hétérophasique (HPPC) selon la revendication 3 contenant du sorbitol de diméthylbenzylidène et/ou du (bis(propylbenzylidène)propyl sorbitol.

5. Composition de copolymère de propylène hétérophasique (HPPC) selon les revendications 3 ou 4 contenant au moins un agent nucléant polymère, de préférence au moins l'un parmi le poly(cyclohexane de vinyle) (PVCH) et le poly(cyclopentane de vinyle) (PVCP).

6. Composition de copolymère de propylène hétérophasique (HPPC) selon l'une des revendications précédentes, présentant :
(ii) une fraction cristalline (CF), déterminée selon le procédé CRYSTEX QC ISO 6427 Annexe B, présente en une quantité dans la plage de 83,0 à 89,0 % en poids, par rapport au poids total de la composition de copolymère de propylène hétérophasique (HPPC) ; et
(iii) une fraction soluble (SF), déterminée selon le procédé CRYSTEX QC ISO 6427 Annexe B, présente en une quantité dans la plage de 11,0 à 17,0 % en poids, par rapport au poids total de la composition de copolymère de propylène hétérophasique (HPPC).

7. Composition de copolymère de propylène hétérophasique (HPPC) selon l'une des revendications précédentes, présentant :
(iv) une viscosité intrinsèque de la fraction soluble (SF), mesurée selon l'ISO 1628-1 (à 135 °C dans la décaline), dans la plage de 2,2 à 2,5 dl/g.

8. Composition de copolymère de propylène hétérophasique (HPPC) selon l'une des revendications précédentes, présentant :
(v) un rapport entre la viscosité intrinsèque de la fraction soluble (SF) mesurée selon l'ISO 1628-1 (à 135 °C dans la décaline) et la viscosité intrinsèque de la fraction cristalline (CF) mesurée selon l'ISO 1628-1 (à 135 °C dans la décaline) IV(SF)/IV(CF) dans la plage de 2,0 à 3,0.

9. Composition de copolymère de propylène hétérophasique (HPPC) selon l'une des revendications précédentes, présentant un brouillard d'une éprouvette d'une épaisseur de 1 mm tel que déterminé à 230 °C de moins de 20 pourcent (ASTM D1003-00).

10. Composition de copolymère de propylène hétérophasique (HPPC) selon l'une des revendications précédentes, présentant un MFR₂ déterminé selon l'ISO 1133 à 230 °C et 2,16 kg, dans la plage de 50,0 à 70,0 g/10 min.

11. Composition de copolymère de propylène hétérophasique (HPPC) selon l'une des revendications précédentes, dans laquelle la teneur en éthylène de la fraction soluble (SF), mesurée par spectroscopie infrarouge à transformée de Fourier (FTIR) pendant l'analyse CRYSTEX est dans la plage de 11,0 à 14,0 % en poids.

12. Composition de copolymère de propylène hétérophasique (HPPC) selon l'une des revendications précédentes pouvant être obtenue par un procédé à plusieurs étapes, dans laquelle la matrice est produite dans les deux premières étapes.

13. Composition de copolymère de propylène hétérophasique (HPPC) selon l'une des revendications précédentes pouvant être obtenue en mélangeant un copolymère de propylène hétérophasique intermédiaire avec au moins un agent alpha-nucléant (B) sélectionné parmi le groupe constitué de sorbitol de diméthylbenzylidène, (bis(propylbenzylidène)propyl sorbitol et leurs mélanges.

14. Article comprenant plus de 90 % en poids, en particulier plus de 95 % en poids de la composition de polymère de propylène hétérophasique (HPPC) selon l'une des revendications précédentes.

15. Article selon la revendication 14 qui est un article moulé, de préférence un article moulé par injection.
